# EUROPÄISCHE PATENTSCHRIFT

(11) **EP 3 622 477 B1**
(45) Veröffentlichungstag und Bekanntmachung des Hinweises auf die Patenterteilung: **04.09.2024**
(21) Anmeldenummer: 18717618.5
(22) Anmeldetag: 13.04.2018
(51) Int. Cl.: G06T 7/00, G06T 7/60, G01B 15/04, G06T 17/00

(54) **COMPUTERIMPLEMENTIERTES VERFAHREN ZUR BESTIMMUNG EINER LOKALEN ABWEICHUNG EINER GEOMETRIE EINES OBJEKTES VON EINER SOLL-GEOMETRIE DES OBJEKTES**
COMPUTER-IMPLEMENTED METHOD FOR DETERMINING A LOCAL DEVIATION OF A GEOMETRY OF AN OBJECT FROM A TARGET GEOMETRY OF THE OBJECT
PROCÉDÉ MIS EN OEUVRE PAR ORDINATEUR ET PERMETTANT DE DÉTERMINER UN ÉCART LOCAL ENTRE UNE GÉOMÉTRIE D'UN OBJET ET UNE GÉOMÉTRIE DE CONSIGNE DE L'OBJET

(30) Priorität: 12.05.2017 DE 102017110340
(43) Veröffentlichungstag der Anmeldung: 18.03.2020
(73) Patentinhaber: Volume Graphics GmbH, 69115 Heidelberg (DE)
(72) Erfinder: POLIWODA, Christoph, 69115 Heidelberg (DE); GÜNTHER, Thomas, 69115 Heidelberg (DE); REINHART, Christof, 69115 Heidelberg (DE)
(74) Vertreter: Patentanwälte Olbricht Buchhold Keulertz
(86) Internationale Anmeldenummer: PCT/EP2018/059580
(87) Internationale Veröffentlichungsnummer: WO 2018/206226

(56) Entgegenhaltungen:
- US-A1- 2015 006 126
- PAVEL MÜLLER ET AL: "Computed Tomography as a Tool for Tolerance Verification of Industrial Parts", PROCEDIA CIRP, vol. 10, 2013, NL, pages 125 - 132, XP055479516, ISSN: 2212-8271, DOI: 10.1016/j.procir.2013.08.022
- KRUTH J P ET AL: "Computed tomography for dimensional metrology", CIRP ANNALS, vol. 60, no. 2, June 2011 (2011-06-01), pages 821 - 842, XP028262022, ISSN: 0007-8506, [retrieved on 20110603], DOI: 10.1016/J.CIRP.2011.05.006
- C REINHART ET AL: "MODERN VOXEL BASED DATA AND GEOMETRY ANALYSIS SOFTWARE TOOLS FOR INDUSTRIAL CT", 2004, pages 1 - 8, XP055479038, Retrieved from the Internet <URL:http://www.ndt.net/article/wcndt2004/pdf/radiography/566_reinhart.pdf> [retrieved on 20180528]
- JONES M W ET AL: "3D distance fields: a survey of techniques and applications", IEEE TRANSACTIONS ON VISUALIZATION AND COMPUTER GRAPHICS, IEEE SERVICE CENTER, LOS ALAMITOS, CA, US, vol. 12, no. 4, July 2006 (2006-07-01), pages 581 - 599, XP002495660, ISSN: 1077-2626, DOI: 10.1109/TVCG.2006.56

## Beschreibung

Die Erfindung betrifft ein computerimplementiertes Verfahren zur Bestimmung einer lokalen Abweichung einer Geometrie eines Objektes von einer Soll-Geometrie des Objektes aus einer digitalen Darstellung des Objektes gemäß Anspruch 1 sowie ein Computerprogrammprodukt nach Anspruch 9.

Die Prüfung von Objekten, insbesondere Werkstücken, hinsichtlich ihrer Übereinstimmung mit einer gewünschten Soll-Geometrie ist ein im Stand der Technik omnipräsentes Thema. Beispielsweise soll so im Zuge einer Werkstückprüfung fortlaufend gewährleistet werden, dass durch einen Herstellungsprozess erzeugte Werkstück mit den der Erzeugung zugrunde liegenden Mustern übereinstimmt. Zur Analyse von Werkstücken haben sich dabei in der Vergangenheit insbesondere zerstörungsfreie Verfahren als besonders interessant herausgestellt. Beispielsweise können durch eine Analyse eines Werkstücks durch ein magnetresonanztomografisches Verfahren auch Hinterschnitte und innenliegende Geometrien des Objektes ermittelt werden, ohne dass das Objekt aufgetrennt werden muss.

Aus der US 2015/0006126 A1 ist ein iteratives Verfahren bekannt, in welchem Grundelementformen an einen Satz von dreidimensionalen Punkten angepasst werden, die als Distanzfeld vorliegen.

Ein gängiges Verfahren zur Bestimmung von lokalen Abweichungen einer Geometrie eines Objektes von einer Soll-Geometrie des Objektes besteht darin, zunächst die Oberfläche des Objektes zu bestimmen und anschließend die ermittelte Oberfläche mit einer Soll-Geometrie des Objektes zu vergleichen. Hierzu kann punktweise bestimmt werden, wie weit die Soll-Geometrie von dem Objekt beabstandet ist. Für eine solche Abstandsbestimmung muss jedoch zunächst die Relation der Lage des Objektes zu der Lage der Soll-Geometrie bestimmt werden. Für jeden einzelnen Punkt der Soll-Geometrie muss dann der Abstand von einem korrespondierenden Punkt des zu untersuchenden Objekts bestimmt werden. Dies ist umständlich und zieht häufig eine hohe Rechenlast nach sich.

Demgegenüber liegt der vorliegenden Erfindung die Aufgabe zugrunde, die zuvor genannten Nachteile des Standes der Technik zu überwinden und ein verbessertes Verfahren zur Bestimmung von lokalen Abweichungen der Geometrie eines Objekts von dessen Soll-Geometrie bereitzustellen.

Hauptmerkmale der Erfindung sind in Anspruch 1 sowie in Anspruch 9 angegeben. Ausgestaltungen sind Gegenstand der Ansprüche 2 bis 8.

In einem ersten Aspekt ist die Aufgabe durch das computerimplementierte Verfahren des Anspruchs 1 gelöst.

Das zuvor beschriebene Verfahren hat dabei den Vorteil, dass für einzelne Punkte auf der Oberfläche der Soll-Geometrie der aus dem Distanzfeld ausgelesene Distanzwert direkt Aufschluss über die lokale Abweichung der Geometrie des Objektes von der Soll-Geometrie des Objektes liefert. Es ist daher nicht mehr notwendig, gesondert den Abstand zwischen einem Punkt der Soll-Geometrie und einem korrespondierenden Punkt auf der tatsächlichen Geometrie des Objektes zu ermitteln. Dabei wird vorzugsweise die Darstellung des Objekts durch das Distanzfeld als alleinige Objektdarstellung verwendet. In diesem Fall kann die ohnehin zur Darstellung des Objektes genutzte Information des Distanzfeldes gleichzeitig auch genutzt werden, um Abweichungen von einer Soll-Geometrie zu bestimmen.

Dabei kann das Distanzfeld die Lage einer Materialgrenzfläche auf im Wesentlichen zwei Wegen codieren. In einem ersten Ansatz gibt ein Distanzwert des Distanzfeldes lediglich den Betrag des Abstands eines entsprechenden Punktes des Distanzfeldes von der nächstliegenden Materialgrenzfläche wieder. In diesem Fall ist jedoch durch die reine Distanzinformation an einem Punkt des Distanzfeldes noch nicht klar, auf welcher Seite einer Materialgrenzfläche der Punkt angeordnet ist. Diese Information kann jedoch zusätzlich in dem Distanzfeld codiert werden, indem die Distanzwerte zusätzlich mit einem Vorzeichen behaftet sind. Distanzwerten von Datenpunkten, welche sich auf einer ersten Seite der Materialgrenzfläche befinden, wird dabei ein positives Vorzeichen zugeordnet, während Datenpunkten auf der zweiten Seite der Materialgrenzfläche ein Distanzwert mit einem negativen Vorzeichen zugeordnet wird. Aus dem Vorzeichen eines Distanzwerts eines Datenpunkts kann dann beispielsweise abgeleitet werden, ob sich ein Datenpunkt innerhalb einer Geometrie bzw. eines Körpers befindet, oder außerhalb. Diese zusätzliche Information kann für das Einpassen der ermittelten Soll-Geometrie in das Distanzfeld verwendet werden.

Ein solches Distanzfeld mit vorzeichenbehafteten Distanzwerten ist dabei als "signed distance field" (SDF) bekannt. Dabei kann ein vorzeichenloses Distanzfeld nach einer Ausführungsform in ein vorzeichenbehaftetes Distanzfeld umgerechnet werden, indem die Distanzwerte so angepasst werden, dass ihr Betrag zwar unverändert bleibt, der Gradient des gesamten Distanzfeldes jedoch an jeder Stelle gleich 1 ist.

Bei einem "Objekt" im Sinne der Erfindung kann es sich um ein beliebiges Objekt handeln, welche durch eine digitale Darstellung so darstellbar ist, dass die Materialgrenzflächen des Objektes definierbar sind. Beispielsweise kann es sich bei einem Objekt um ein Werkstück aus Metall handeln.

Dieses Objekt kann in beliebiger Art und Weise digital dargestellt sein. Beispielsweise kann die digitale Darstellung in Form einer Abbildung des Objektes nach einer Untersuchung durch einen Magnetresonanztomographen vorliegen. In diesem Fall würden die Bildinformationen des Objektes die lokalen Relaxationszeiten eines Kernspins an einer bestimmten Position des Objekts repräsentieren. Aus einer solchen Relaxationszeit könnte beispielsweise auf die Beschaffenheit des Materials an der Position eines Messpunktes geschlossen werden.

Die Ermittlung der Objektdarstellung kann dabei auf unterschiedlichen Wegen erfolgen. In dem zuvor genannten Beispiel kann die Objektdarstellung durch eine Messung des Objektes mittels eines Magnetresonanztomographen erzeugt werden. Es ist jedoch durchaus auch möglich, dass die Objektdarstellung aus einem Speichermedium abgerufen wird, wodurch auf eine zuvor durchgeführte Messung oder anderweitige Darstellung eines Objektes zurückgegriffen wird.

Gleichermaßen kann auch die Ermittlung der Soll-Geometrie des Objektes dadurch erfolgen, dass ein Speichermedium ausgelesen wird, welches Informationen enthält, die dem dargestellten Objekt zugeordnet sind.

Das Distanzfeld kann nach einer Ausführungsform einen kontinuierlichen Verlauf der Distanzwerte in Form eines skalaren Feldes aufweisen. Auf diese Weise könnte für einen beliebigen Punkt im Raum der jeweilige Distanzwert auf einfache Art und Weise aus dem Distanzfeld ausgelesen werden. Es sind jedoch durchaus auch andere Möglichkeiten denkbar, wie ein Distanzfeld realisiert werden kann. Auf diese wird im Folgenden noch eingegangen werden.

Zur Registrierung der Soll-Geometrie des Objektes auf die durch die Distanzwerte angegebenen Materialgrenzflächen der Geometrie des Objektes könnte beispielsweise aus der Kenntnis der Lage des abgebildeten Objektes in einem abbildenden System eine einfache Überlagerung der Soll-Geometrie mit der Geometrie des Objektes erreicht werden.

Nach einer Ausführungsform kann beispielsweise zur Registrierung der Soll-Geometrie des Objektes auf die durch die Distanzwerte angegebenen Materialgrenzflächen der Geometrie des Objektes die Soll-Geometrie des Objektes durch Anwenden eines Fit-Verfahrens in das Distanzfeld eingepasst werden. Dabei werden vorzugsweise zum Einpassen der Soll-Geometrie ausschließlich die Distanzwerte des Distanzfeldes verwendet. Eine neuerliche Ermittlung der Lage der Materialgrenzflächen aus den Informationen des Distanzfeldes ist dabei nicht notwendig. Dies hat den Vorteil, dass die Lage des dargestellten Objektes in einem abbildenden System nicht von vorneherein bekannt sein muss. Vielmehr kann für eine beliebige Lage des Objektes in der digitalen Darstellung die Soll-Geometrie in Überlagerung mit dem Objekt gebracht werden. Dies erhöht die Flexibilität des erfindungsgemäßen Verfahrens.

Als Fit-Verfahren kann nach einer weiteren Ausführungsform die Soll-Geometrie des Objektes durch Anwendung des Verfahrens der kleinsten Quadrate und/oder eines Minimum-Zonen-Fits und/oder durch Einpassen der Soll-Geometrie als eingeschriebene und/oder umschreibende Figur in das Distanzfeld eingepasst werden. Dabei haben die unterschiedlichen Ansätze zum Einpassen der Soll-Geometrie des Objektes unterschiedliche Vorteile, welche für verschiedene Situationen vorteilhaft sind. Beispielsweise ist das Einpassen der Soll-Geometrie als eingeschriebene und/oder umschreibende Figur dann sinnvoll, wenn für eine bestimmte Geometrie des untersuchten Objektes der maximale oder minimale Durchmesser oder Abstand bestimmt werden soll. Dies kann beispielsweise im Bereich von Bolzen oder Bohrlöchern oder anderen hervorstehenden oder extrudierten Geometrien notwendig sein.

Bei dem Einpassen der Soll-Geometrie kann dabei im Wesentlichen nach zwei Anwendungsszenarien unterschieden werden. In einem ersten Anwendungsszenario soll die Geometrie eines Objekts mit einer exakten Soll-Geometrie inklusive entsprechender Bemaßungen verglichen werden. In diesem Fall ist beispielsweise ein Fit nach Gauß sinnvoll, da die Dimensionen der Soll-Geometrie festgelegt sind. Eine Einpassung als eingeschriebene oder umschreibende Geometrie ist dabei nicht sinnvoll. In einem zweiten Szenario kann ein Vergleich einer Geometrie mit einer Form der Soll-Geometrie vorgesehen sein, bei dem die Bemaßung der Soll-Geometrie zunächst keine Rolle spielt. Beispielsweise kann so geprüft werden, ob ein beispielsweise als runder Körper ausgelegtes Objekt auch tatsächlich rund ist. In diesem Fall kann auch ein Fit einer Soll-Geometrie als eingeschriebene oder umschreibende Figur sinnvoll sein.

Nach einer weiteren Ausführungsform kann eine ermittelte lokale Abweichung der Geometrie des Objektes von der Soll-Geometrie durch eine Falschfarbendarstellung ausgegeben werden, was einem Nutzer die Erkennung von Abweichungen deutlich erleichtert.

Nach einer weiteren Ausführungsform weist das Distanzfeld eine Vielzahl von in einem Raster angeordneten Datenpunkten auf, wobei das Distanzfeld den Datenpunkten jeweils wenigstens einen Distanzwert für die Position des Datenpunktes zuordnet. Dies hat gegenüber dem zuvor beschriebenen kontinuierlichen Distanzfeld, welches für jeden Punkt im Raum den jeweiligen Distanzwert enthält, den Vorteil, dass nur für ausgewählte Datenpunkte der Distanzwert ermittelt werden muss. Folglich ist der Aufwand zur Bestimmung des Distanzfeldes deutlich reduziert. Aufgrund der allgemeinen Linearität eines solchen Distanzfeldes kann dabei aus der Kenntnis der relativen Lage der Datenpunkte zueinander aus den Distanzwerten benachbarter Datenpunkte ein entsprechender Distanzwert in einem Zwischenraum zwischen den Datenpunkten ermittelt werden. Folglich kann auch bei einem gerasterten Distanzfeld an jeder beliebigen Position auf der Oberfläche einer eingepassten Soll-Geometrie der lokale Distanzwert des Distanzfeldes festgestellt werden, sodass die lokale Abweichung durch einfaches Auslesen des Distanzfeldes ermittelt werden kann.

Die zuvor beschriebene Ermittlung von Distanzwerten in einem Zwischenraum zwischen Datenpunkten ist insbesondere dann stark vereinfacht, wenn es sich bei dem Raster des Distanzfeldes um ein orthogonales und/oder isotropes Gitter handelt. Ein Gitter ist dabei genau dann orthogonal, wenn die Verbindungen zwischen benachbarten Datenpunkten des Gitters stets parallel oder senkrecht zueinander stehen. Ein isotropes Gitter liegt dann vor, wenn das Gitter in jeder Richtung des Gitters gleich aufgebaut ist. Im Falle eines solchen Gitters ist für das gesamte Gitter die relative Lage der Datenpunkte zueinander stets konstant, sodass mit einer einfachen Rechenvorschrift aus den Distanzwerten einzelner Datenpunkte auf Distanzwerte zwischen den Datenpunkten zurückgerechnet werden kann. Folglich wird in diesem Fall die Bestimmung der Distanzwert aus beliebigen Punkten einer Oberfläche einer Soll-Geometrie nochmals vereinfacht.

Wie zuvor bereits ausgeführt wurde, beruht der Kerngedanke der vorliegenden Erfindung darauf, dass eine lokale Abweichung einer Soll-Geometrie von der Geometrie eines dargestellten Objekts direkt aus dem Distanzfeld der Materialgrenzflächen des Objekts ausgelesen wird. Zur Ermittlung des Distanzfeldes kann nach einer Ausführungsform dabei wie folgt vorgegangen werden. Zunächst wird die Lage von Materialgrenzflächen des Objekts aus den Bildinformationen der Objektdarstellung ermittelt. Hierzu sind aus dem Stand der Technik eine Vielzahl von Lösungen bekannt, auf die im Einzelnen hier nicht eingegangen wird. Anschließend wird für einen Datenpunkt der Vielzahl von Datenpunkten des Distanzfeldes, eine zu den Datenpunkten nächstliegende Materialgrenzfläche ermittelt. Ausgehend von der ermittelten nächstliegenden Materialgrenzfläche wird der jeweilige Abstand des Datenpunktes bzw. der Datenpunkte des Distanzfeldes von der jeweiligen nächstliegenden Materialgrenzfläche ermittelt und der jeweils ermittelte Abstand zu den jeweiligen Datenpunkten als Distanzwert zugeordnet. Unter der Annahme einer bestimmten Genauigkeit der Ermittlung der Lage der Materialgrenzflächen, ist dabei auch die Repräsentation der Materialgrenzflächen anhand des Distanzfeldes entsprechend genau, sodass durch die Repräsentation einer Materialgrenzfläche durch ein Distanzfeld kein Informationsverlust eintritt. Der zuvor beschriebene Verfahrensablauf zur Ermittlung eines Distanzfeldes stellt dabei eine einfache Möglichkeit zur Ermittlung eines solchen dar.

Die Ermittlung der Soll-Geometrie des Objekts erfolgt erfindungsgemäß dadurch, dass die Soll-Geometrie durch eine Nutzereingabe vorgegeben ist. Hierzu kann beispielsweise die digitale Darstellung des Objekts einem Nutzer präsentiert werden, wobei der Nutzer eine Vielzahl von Grundformen auswählen kann und diese dann entsprechenden Bereichen des dargestellten Objekts zuordnet.

Alternativ oder zusätzlich ist erfindungsgemäß vorgesehen, dass die Soll-Geometrie aus einer CAD-Datei ermittelt wird, welche beispielsweise zur Steuerung einer CNC-Maschine bei der Herstellung des untersuchten Objekts verwendet wurde. In diesem Fall ist ein guter, direkter Vergleich zwischen den Abmessungen bzw. der Geometrie des dargestellten Objekts und dem eigentlich zu erzielenden Aufbau bzw. der Geometrie des Objekts anhand der CAD-Datei möglich.

Offenbarungsgemäß ist vorgesehen, dass die in das Distanzfeld einzupassende Soll-Geometrie des Objekts aus dem Distanzfeld selbst ermittelt wird. Hierzu kann beispielsweise vorgesehen sein, dass ein Analyseprogramm nacheinander verschiedene Grundkörper, wie beispielsweise Kuben, Würfel, Zylinder oder Ähnliches, oder auch Freiformflächen, in das Distanzfeld einpasst. Für die einzelnen eingepassten Geometrien kann dann beispielsweise anhand eines Chi-Quadrat-Tests ermittelt werden, ob der eingepasste Körper den durch das Distanzfeld codierten Materialgrenzflächen mit hinreichender Genauigkeit entspricht. Die Auswahl der einzupassenden Soll-Geometrie kann dann erfolgen, indem jene Geometrie ausgewählt wird, für die das beste Fitergebnis anhand des Chi-Quadrats erzielt wurde. In diesem Fall kann durch einen Soll-Ist-Vergleich beispielsweise geprüft werden, ob die Geometrie des dargestellten und durch das Distanzfeld codierten Objekts einer bestimmten Soll-Geometrie entspricht. Als konkretes Beispiel könnte beispielsweise geprüft werden, ob eine eigentlich runde Geometrie tatsächlich rund ist. Die Abweichungen der untersuchten Geometrie von der Soll-Geometrie können dann wiederum in Falschfarben dargestellt sein, sodass ein Nutzer schnell erkennen kann, an welchen Stellen des dargestellten Objekts Abweichungen von der Soll-Geometrie bestehen.

Die automatische Auswahl der Soll-Geometrie aus den Werten des Distanzfeldes selbst hat den Vorteil, dass die Analyse und Vermessung des durch die digitale Darstellung dargestellten Objekts vollständig automatisiert erfolgen kann. Es müssen lediglich zu Beginn der Untersuchung des Objekts die wahrscheinlich vorhandenen geometrischen Grundformen spezifiziert werden. Die exakte Analyse bzw. Einpassung und lokale Zuordnung der einzupassenden Geometrien kann dann durch das Analyseprogramm selbst erfolgen.

Nach einer bevorzugten Ausführungsform handelt es sich bei der Objektdarstellung um eine gerasterte Darstellung des Objekts, wobei die gerasterte Darstellung eine Vielzahl von in einem Raster angeordneten Messpunkten einer Messung des Objekts aufweist. Ein Messpunkt weist dann wenigstens eine Bildinformation auf. Zur Rasterung der Darstellung des Objekts kann dabei jedes beliebige Gitter verwendet werden. Vorzugsweise handelt es sich dabei um ein regelmäßiges Gitter, um eine homogene Darstellung des Objekts zu gewährleisten. Nach einer weiteren Ausführungsform handelt es sich bei der Messung um eine computertomografische Messung, wobei die Bildinformation eines Bildpunktes die Röntgendichte des Materials des Objekts an der Stelle des Bildpunktes anzeigt. Die Computertomografie ist dabei eine bevorzugte Methode zur zerstörungsfreien Untersuchung von Werkstücken, da sie in der Lage ist, die Geometrie eines Objekts mit einer sehr hohen Auflösung abzubilden.

In einem weiteren Aspekt betrifft die Erfindung ein Computerprogrammprodukt mit auf einem Computer ausführbaren Instruktionen, welche auf einem Computer ausgeführt, den Computer dazu veranlassen, das Verfahren nach einem der vorhergehenden Ansprüche durchzuführen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Figur 1: eine schematische Darstellung eines Objektes mit einem überlagerten Distanzfeld,
- Figur 2: eine schematische Darstellung einer Materialgrenzfläche und einer überlagerten Soll-Geometrie sowie einer Bestimmung der lokalen Abweichung der Soll-Geometrie von der Grenzfläche,
- Figur 3: eine schematische Darstellung einer eingepassten Figur sowie einer umschreibenden Figur,
- Figur 4: eine schematische Darstellung eines Minimum-Zonen-Fits und
- Figur 5: ein Flussdiagramm des erfindungsgemäßen Verfahrens.

Im Folgenden werden einander ähnliche oder identische Merkmale mit denselben Bezugszeichen gekennzeichnet.

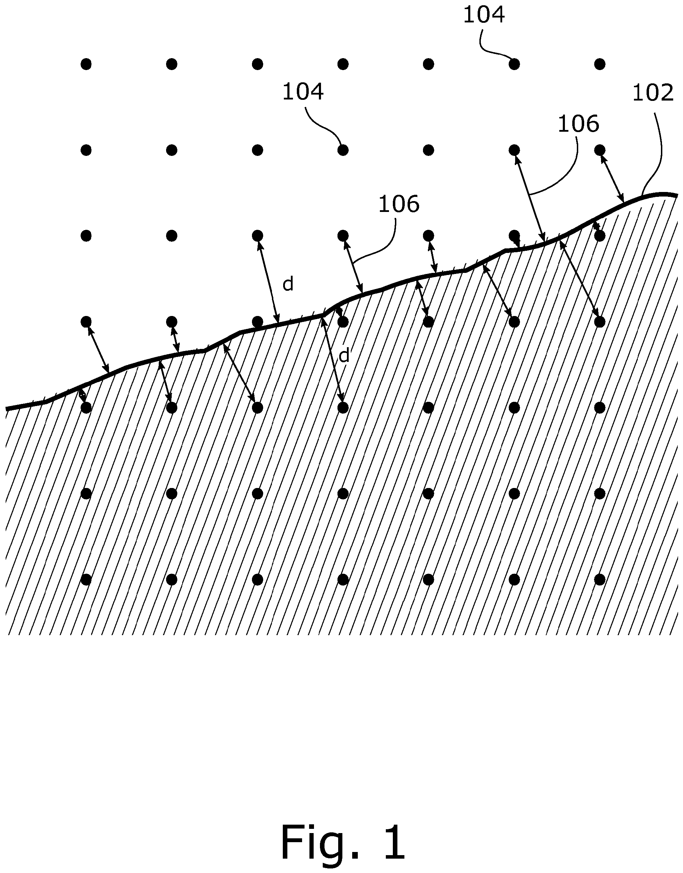

Die Figur 1 zeigt eine schematische Darstellung eines Ausschnitts einer Objektdarstellung mit einem die Objektdarstellung überlagernden Distanzfeld. Die Objektdarstellung bzw. das dargestellte Objekt ist dabei im Wesentlichen durch die Materialgrenzfläche 102 gekennzeichnet, welche sich schräg durch den Bildausschnitt erstreckt. Die Materialgrenzfläche 102 bezeichnet den Übergang, an dem ein erstes Material des dargestellten Objekts in ein zweites Material des dargestellten Objekts oder in die das Objekt umgebende Luft übergeht. So kann beispielsweise in dem weiß dargestellten Bereich Luft vorliegen, während in dem schraffiert dargestellten Bereich das dargestellte Objekt aus Metall besteht. Wie in Figur 1 gut zu erkennen ist, ist die Materialgrenzfläche 102 nicht gleichmäßig linear, sondern weist kleine lokale Unebenheiten auf. Diese sind in Figur 1 jedoch überzeichnet dargestellt.

Das die Objektdarstellung überlagernde Distanzfeld wird im Wesentlichen durch eine Vielzahl von Datenpunkten 104 dargestellt. Die Datenpunkte 104 sind dabei in einem regelmäßigen, quadratischen, isotropen Gitter angeordnet. Obwohl in Figur 1 eine zweidimensionale Darstellung gezeigt ist, kann die dargestellte Situation ohne Weiteres auf eine dreidimensionale Darstellung des Objekts übertragen werden. In diesem Fall sind die Datenpunkte 104 beispielsweise in einem kubischen Gitter angeordnet.

Wie zuvor bereits ausgeführt wurde, weist ein Distanzfeld den Datenpunkten 104 jeweils einen Distanzwert zu, welcher den kürzesten Abstand eines Datenpunktes 104 zu einer jeweils zu dem Datenpunkt 104 nächstgelegenen Materialgrenzfläche 102 beschreibt. Um dies zu illustrieren, sind in der Figur 1 für all jene Datenpunkte 104, welche direkt benachbart zu der Materialgrenzfläche 102 angeordnet sind, jeweils die Verbindungsvektoren 106 zu der nächstgelegenen Materialgrenzfläche 102 eingezeichnet. Die Bedingung, dass die kürzeste Verbindung zwischen dem Datenpunkt 104 und Materialgrenzfläche 102 als Distanzwert verwendet wird, wird dabei dadurch gewährleistet, dass die Verbindungsvektoren 106 im Allgemeinen senkrecht auf der Materialgrenzfläche 102 stehen. Folglich sind die einzelnen Verbindungsvektoren 106 für die unterschiedlichen Datenpunkte 104 im Allgemeinen zunächst nicht parallel. Wäre die Materialgrenzfläche 102 jedoch exakt gerade ohne die dargestellten Unebenheiten, wären die Verbindungsvektoren 106 zueinander parallel ausgerichtet.

Der Distanzwert, welcher einem Datenpunkt 104 zugeordnet wird, entspricht dabei dem Betrag des Verbindungsvektors 106 eines Datenpunktes 104 bzw. dessen Länge. Der Distanzwert ist in der Figur 1 exemplarisch mit dem Buchstaben d abgekürzt. Durch die Vielzahl von Distanzwerten d, welche in dem Distanzfeld der Vielzahl von Datenpunkten 104 zugeordnet sind, ist eine im Rahmen der Genauigkeit der zugrundeliegenden Objektdarstellung exakte Rekonstruktion der Materialgrenzfläche 102 möglich. Folglich kann die Materialgrenzfläche 102 vollständig durch das Distanzfeld codiert sein. Ist dabei die Lage der Materialgrenzfläche 102 aus den Bildinformationen der digitalen Darstellung des Objekts mit einer bestimmten Genauigkeit ermittelt worden, ist auch die Repräsentation der Materialgrenzfläche 102 durch das Distanzfeld entsprechend genau.

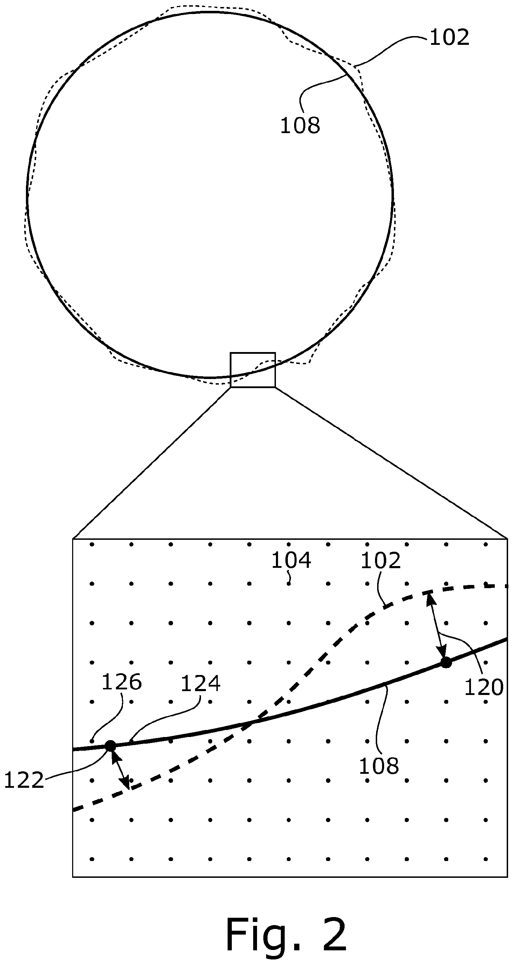

Die Figur 2 zeigt eine schematische Darstellung einer im wesentlichen kreisrunden Materialgrenzfläche 102, welche gestrichelt dargestellt ist. Die Materialgrenzfläche 102 ist dabei mit einer Soll-Geometrie 108 überlagert, welche beispielsweise durch das Verfahren der kleinsten Quadrate in die Materialgrenzfläche 102 eingepasst wurde. Die Soll-Geometrie 108 ist dabei mit einer durchgezogenen Linie dargestellt. Beispielsweise kann es sich bei der dargestellten Geometrie um eine Bohrung oder einen Bolzen handeln, sodass die Geometrie mit einer Kreisform als Soll-Geometrie 108 hinsichtlich lokaler Abweichung untersucht wird. Die dargestellte zweidimensionale Abbildung ist ohne Weiteres auch auf die dreidimensionale Abbildung übertragbar. In diesem Fall handelte es sich beispielsweise bei der Soll-Geometrie 108 um einen Zylinder.

Der Verlauf der Materialgrenzfläche 102 ist in der Figur 2 in seinen Abweichungen von einer Soll-Geometrie 108 stark überzeichnet, um den beschriebenen Sachverhalt besser zu verdeutlichen.

In einem unteren Bereich der dargestellten Geometrie ist in Figur 2 ein vergrößerter Teilabschnitt dargestellt. In dem vergrößerten Ausschnitt wurde, anders als in der Figur 2 oben, das Distanzfeld bzw. die einzelnen Datenpunkte 104 des Distanzfeldes eingezeichnet. Auch hier handelt es sich bei dem Distanzfeld 104 um ein regelmäßiges isotropes Gitter, welches aus quadratischen Einzelzellen aufgebaut ist. Den einzelnen Datenpunkten 104 ist wieder jeweils der Distanzwert, also der kürzeste Abstand des Datenpunktes 104 zu einer nächstgelegenen Materialgrenzfläche 102 des dargestellten Objekts zugeordnet.

Zur Ermittlung einer lokalen Abweichung der Geometrie des untersuchten Objektes, dargestellt durch die Materialgrenzfläche 102, von der Soll-Geometrie 108 kann nun auf einer beliebigen Position auf der Oberfläche der Soll-Geometrie 108 der lokale Wert des Distanzfeldes, also der entsprechend zugeordnete Distanzwert, ausgelesen werden. Beispielsweise ist für den Punkt 120 gegeben, dass dieser Oberflächenpunkt der Soll-Geometrie 108 gleichzeitig mit einem Datenpunkt 104 des Distanzfeldes zusammenfällt. Somit kann an dieser Stelle auf einfache Art und Weise der lokale Abstand der Soll-Geometrie 108 von der Materialgrenzfläche 102 des Objektes bestimmt werden. In einem unteren linken Bereich des Teilausschnittes wurde hingegen ein Punkt auf der Oberfläche 108 der Soll-Geometrie ausgewählt, welcher zwischen den Datenpunkten 104 des Distanzfeldes angeordnet ist. Aufgrund der Linearität des Distanzfeldes sowie der regelmäßigen Anordnung der Datenpunkte 104 in dem Gitter des Distanzfeldes kann aus den Distanzwerten der benachbarten Datenpunkte 124 und 126 auf den Wert des Distanzfeldes an der Position des Punktes 122 zurückgerechnet werden. Dies ist durch einfache trigonometrische Überlegungen möglich, welche hier nicht detailliert ausgeführt werden. Folglich ist auch für den Zwischenbereich zwischen den Datenpunkten 124 und 126 eine Bestimmung der lokalen Abweichung der Soll-Geometrie 108 von der Materialgrenzfläche 102 mit geringem Aufwand möglich.

Zusammenfassend ermöglicht die Darstellung eines Objektes bzw. einer Materialgrenzfläche 102 des Objektes durch ein Distanzfeld, eine einfache Bestimmung einer lokalen Abweichung des untersuchten Objektes von einer Soll-Geometrie 108 durch Auslesen der Werte des Distanzfeldes.

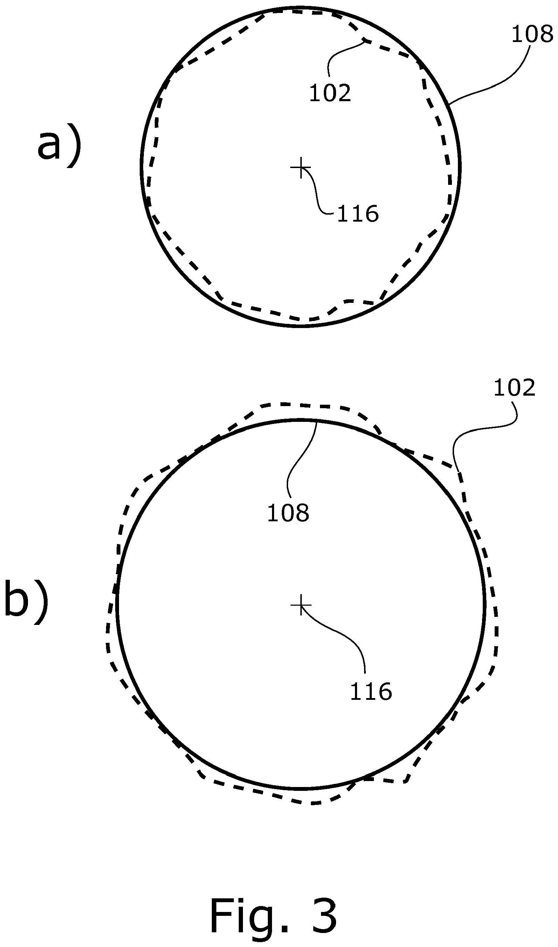

Neben dem zuvor beschriebenen Fit einer Soll-Geometrie 108 anhand der Methode der kleinsten Quadrate kann es in verschiedenen Situationen auch sinnvoll sein, andere Methoden zur Einpassung der Soll-Geometrie in die durch die Distanzwerte codierte Materialgrenzfläche 102 zu benutzen. Hierzu sind in Figur 3 zwei mögliche Anpassungsverfahren dargestellt, nämlich die Einpassung einer Soll-Geometrie als umschreibende Figur in Figur 3 a), sowie die Einpassung der Soll-Geometrie als eingeschriebene Figur in Figur 3 b). Auch in der Figur 3 wurde wiederum eine Kreisform als Soll-Geometrie gewählt, um den Sachverhalt zu illustrieren.

In Figur 3 a) ist die Soll-Geometrie 108 als umschreibende Figur an die Materialgrenzfläche 102 eingepasst. Das in Figur 2 dargestellte Distanzfeld bzw. die Datenpunkte 104 des Distanzfeldes sind in der Figur 3 aus Gründen der Übersichtlichkeit nicht dargestellt. Wie in Figur 3 a) erkennbar ist, handelt es sich bei einer umschreibenden Figur um eine Figur, welche so angeordnet ist, dass sämtliche Punkte der Materialgrenzfläche 102 innerhalb der eingepassten Soll-Geometrie 108 angeordnet sind. Die Einpassung einer Soll-Geometrie 108 als umschreibende Figur kann beispielsweise dann sinnvoll sein, wenn es sich bei der Geometrie, welche in Figur 3 a) dargestellt ist, beispielsweise um einen aus einem Objekt hervorstehenden Bolzen handelt. In diesem Fall ist nämlich relevant, welchen maximalen Durchmesser der Bolzen hat, sodass entschieden werden kann, ob er in eine entsprechende Bohrung passt oder eben nicht.

In Figur 3 b) ist demgegenüber eine Einpassung einer Soll-Geometrie 108 in einer Materialgrenzfläche 102 gezeigt, bei der die Soll-Geometrie 108 als eingeschriebene Figur in die Materialgrenzfläche 102 eingepasst ist. Dies bedeutet, dass die Soll-Geometrie 108 vollständig innerhalb der Materialgrenzfläche 102 angeordnet ist. Diese Form der Einpassung kann beispielsweise zur Analyse von Bohrungen oder Löchern in einem untersuchten Objekt relevant sein. In diesem Fall ist nämlich der Mindestdurchmesser einer Bohrung relevant, um zu entscheiden, ob die Bohrung zur Aufnahme eines entsprechenden gegenstückigen Elementes geeignet ist. Bei dem Vergleich der Figuren 3 a) und 3 b) ist zu beachten, dass durch die Wahl einer eingeschriebenen oder umschreibenden Figur nicht nur der aus der eingepassten Soll-Geometrie bestimmte Durchmesser der untersuchten Geometrie zu unterschiedlichen Ergebnissen führt, sondern auch der Mittelpunkt 116 der eingefassten Soll-Geometrie 108 unterschiedlich ausfallen kann.

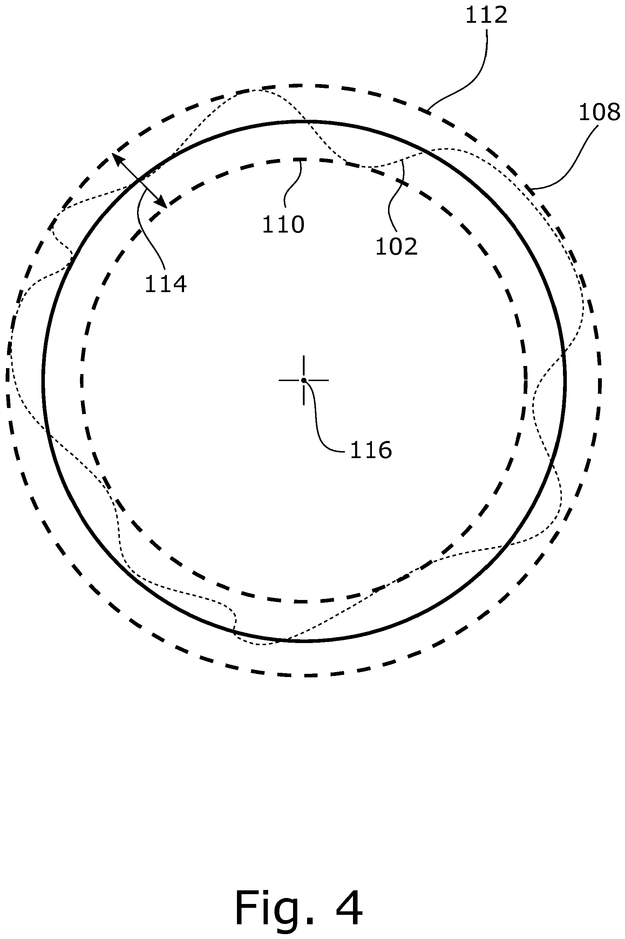

Neben den zuvor beschriebenen Varianten zur Einpassung einer Soll-Geometrie 108 mittels einer mittleren quadratischen Abweichung oder der Einpassung einer Soll-Geometrie 108 als eingeschriebene oder umschreibende Figur, kann, wie in Figur 4 dargestellt, ferner auch eine Einpassung einer Soll-Geometrie 108 im Zuge eines Minimum-Zonen-Fits erfolgen.

In der Figur 4 ist hierzu eine Materialgrenzfläche 102 dargestellt, welche gegenüber den in Figuren 2 und 3 dargestellten Materialgrenzflächen 102 eine deutlich stärker von einer Kreisform abweichenden Geometrie aufweist. Diese Geometrie wurde erneut lediglich zur besseren Illustration gewählt.

Bei einem Minimum-Zonen-Fit wird im Allgemeinen die Soll-Geometrie 108 sowohl als eingeschriebene Figur als auch als umschreibende Figur in die Materialgrenzfläche 102 eingepasst. Die entsprechende eingeschriebene Figur ist mit dem Bezugszeichen 110 gekennzeichnet, während die umschreibende Figur das Bezugszeichen 112 trägt. Aus der eingeschriebenen Figur 110 und der umschreibenden Figur 112 wird dann die Position der Soll-Geometrie 108 dadurch ermittelt, dass die Soll-Geometrie 108 genau so positioniert wird, dass sie zu der umschreibenden Figur 112 und zu der eingeschriebenen Figur 110 jeweils denselben Abstand 114 aufweist. Dabei werden die eingeschriebene Figur sowie die umschreibende Figur 112 so positioniert, dass ihre Mittelpunkte 116 identisch sind.

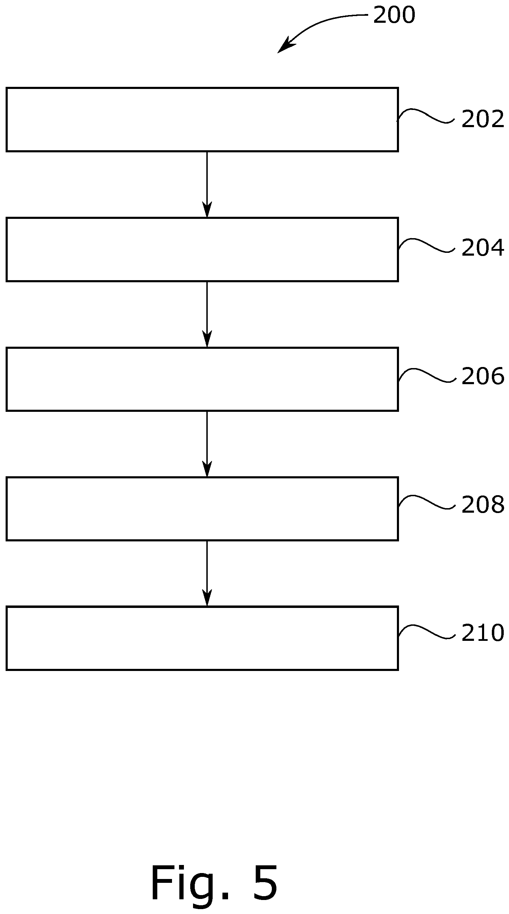

Die Figur 5 zeigt ein Flussdiagramm 200 des erfindungsgemäßen Verfahrens. Dabei wird in einem ersten Verfahrensschritt 202 die Objektdarstellung, also die digitale Darstellung des zu untersuchenden Objektes, ermittelt. Beispielsweise kann die Objektdarstellung durch eine Messung des Objekts, beispielsweise eine computertomografische Messung, ermittelt werden. Alternativ kann die Objektdarstellung aus einem Datenträger ausgelesen werden.

Anschließend wird in einem nachfolgenden Verfahrensschritt 204 aus den Bildinformationen der Objektdarstellung ein Distanzfeld ermittelt, welches eine Vielzahl von Distanzwerten aufweist. Die Distanzwerte ordnen dabei beliebigen Punkten innerhalb des Distanzfeldes den jeweiligen Abstand des Punktes von einer nächstgelegenen Materialgrenzfläche des dargestellten Objektes zu. Zur Ermittlung des Distanzfeldes kann beispielsweise von bekannten Lagen der Materialgrenzflächen des dargestellten Objektes ausgegangen werden, sodass auf einfache Art und Weise ein Distanzfeld ermittelt werden kann. Bei dem Distanzfeld kann es sich dabei sowohl um ein kontinuierliches, skalares Feld handeln, als auch um eine gerasterte Darstellung, welche in einem Gitter angeordnete Datenpunkte enthält, denen jeweils der lokale Distanzwert an der Position des Datenpunktes zugeordnet ist.

In dem Verfahrensschritt 206 wird ferner eine Soll-Geometrie des Objektes ermittelt, welche mit der tatsächlichen Geometrie des dargestellten Objektes verglichen werden sollen. Die Ermittlung der Soll-Geometrie des Objektes kann beispielsweise dadurch erfolgen, dass ein Datenträger ausgelesen wird, in dem eine Information über die eigentlich beabsichtigte Geometrie des dargestellten Objektes gespeichert ist. Beispielsweise kann die Soll-Geometrie aus einem Konstruktionsdatensatz des Objekts in Form einer CAD-Datei extrahiert werden. Ferner ist es auch möglich, dass die Soll-Geometrie durch eine Nutzereingabe vorgegeben wird, beispielsweise indem die Objektdarstellung einem Nutzer über ein Display präsentiert wird, sodass der Nutzer verschiedenen Bereichen des dargestellten Objektes verschiedene Soll-Geometrien zuordnen kann.

In Schritt 208 wird die ermittelte Soll-Geometrie auf die durch die Distanzwerte angegebenen Materialgrenzflächen des Objektes registriert. Eine Registrierung kann dabei auf verschiedenen Wegen erfolgen. In einem einfachen Ansatz kann beispielsweise aus der Kenntnis der Lage des dargestellten Objektes in einem abbildenden System, beispielsweise einem Computertomografen, auf die entsprechende Ausrichtung und Lage der Soll-Geometrie in der Darstellung des Objektes geschlossen werden. Ferner ist es auch möglich, eine Soll-Geometrie durch Anwendung eines Fit-Verfahrens mit einer tatsächlichen Geometrie eines dargestellten Objektes zu überlagern. Dabei ist zu beachten, dass im Zuge des Fit-Verfahrens die Abmessungen der Soll-Geometrie im Allgemeinen nicht verändert werden sollen, da üblicherweise nicht nur ein Vergleich der Form des Objektes stattfinden soll, sondern auch ein Vergleich der Dimensionen des Objektes, wie sie durch die Soll-Geometrie angegeben sind.

In einem abschließenden Verfahrensschritt 210 wird dann an verschiedenen Positionen der Oberfläche der Soll-Geometrie jeweils der lokale Wert des Distanzfeldes ausgelesen, welcher repräsentativ ist für eine lokale Abweichung der Geometrie des dargestellten Objektes gegenüber der auf das Objekt registrierten Soll-Geometrie. So kann auf einfache Art und Weise mit geringem Rechenaufwand eine Bestimmung der lokalen Abweichung einer Geometrie von einer Soll-Geometrie durchgeführt werden. Die so ermittelten Abweichungen können beispielsweise in Form einer Falschfarbendarstellung einem Nutzer präsentiert werden, sodass beispielsweise schnell festgestellt werden kann, wo und in welchem Maße die Geometrie eines erzeugten Objektes, beispielsweise eines Werkstücks, von einer gewünschten Soll-Geometrie abweicht.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten können sowohl für sich als auch in den verschiedensten Kombinationen erfindungswesentlich sein.

### Bezugszeichenliste

- 102: Materialgrenzfläche
- 104: Datenpunkt
- 106: Verbindungsvektor
- 108: Soll-Geometrie
- 110: eingeschriebene Figur
- 112: umschreibende Figur
- 114: Abstand
- 116: Mittelpunkt
- 120: Oberflächenpunkt
- 122: Oberflächenpunkt
- 124: Datenpunkt
- 126: Datenpunkt

## Patentansprüche

1. Computer-implementiertes Verfahren zur Bestimmung einer lokalen Abweichung einer Geometrie eines Objekts von einer Soll-Geometrie des Objekts aus einer digitalen Darstellung des Objekts, wobei die Objektdarstellung eine Vielzahl von Bildinformationen des Objekts aufweist, wobei eine Bildinformation einen Wert einer Messgröße für das Objekt an einer definierten Position des Objekts anzeigt, wobei das Verfahren die folgenden Schritte aufweist:
• ermitteln der Objektdarstellung,
• ermitteln eines Distanzfeldes aus den Bildinformationen der Objektdarstellung, wobei das Distanzfeld eine Vielzahl von Distanzwerten aufweist, wobei ein Distanzwert für einen bestimmten Punkt des Distanzfelds den kürzesten Abstand des Punktes zu einer nächstgelegenen Materialgrenzfläche (102) der Geometrie des Objekts angibt,
• ermitteln der Soll-Geometrie (108) des Objekts, wobei
die Soll-Geometrie (108) des Objekts durch eine Nutzereingabe vorgegeben wird und/oder die Soll-Geometrie (108) des Objekts aus einer CAD-Datei ermittelt wird,
• registrieren der Soll-Geometrie (108) des Objekts auf die durch die Distanzwerte angegebenen Materialgrenzflächen der Geometrie des Objekts, und
• ermitteln der lokalen Abweichung der Geometrie des Objekts von der Soll-Geometrie (108) des Objekts an einem Prüfpunkt auf einer durch die Soll-Geometrie (108) vorgegebenen Materialgrenzfläche durch Auslesen des Distanzwerts des Distanzfeldes an der Position des Prüfpunkts.

2. Verfahren nach Anspruch 1, **dadurch gekennzeichnet, dass** zur Registrierung der Soll-Geometrie (108) des Objekts auf die durch die Distanzwerte angegebenen Materialgrenzflächen (102) der Geometrie des Objekts die Soll-Geometrie (108) des Objekts durch Anwendung eines Fit-Verfahrens in das Distanzfeld eingepasst wird.

3. Verfahren nach Anspruch 2, **dadurch gekennzeichnet, dass** die Soll-Geometrie (108) des Objekts durch Anwendung des Verfahrens der kleinsten Quadrate und/oder eines Minimum-Zonen-Fits und/oder durch Einpassen der Soll-Geometrie (108) als eingeschriebene und/oder umschreibende Figur in das Distanzfeld eingepasst wird

4. Verfahren nach einem der vorhergehenden Ansprüche, **dadurch gekennzeichnet, dass** das Distanzfeld eine Vielzahl von in einem Raster angeordneten Datenpunkten (104) aufweist, wobei das Distanzfeld den Datenpunkten (104) jeweils wenigstens einen Distanzwert für die Position des Datenpunktes (104) zuordnet.

5. Verfahren nach Anspruch 4, **dadurch gekennzeichnet, dass** es sich bei dem Raster des Distanzfelds um ein orthogonales und/oder isotropes Gitter handelt.

6. Verfahren nach einem der vorhergehenden Ansprüche, **dadurch gekennzeichnet, dass** das Ermitteln des Distanzfeldes die nachfolgenden Schritte umfasst:
• ermitteln der Lage von Materialgrenzflächen (102) aus den Bildinformationen der Objektdarstellung,
• ermitteln einer jeweils zu einem Datenpunkt (104) nächstliegenden Materialgrenzfläche (102) für die Datenpunkte (104) des Distanzfeldes,
• ermitteln des jeweiligen Abstands der Datenpunkte (104) von der jeweiligen nächstliegenden Materialgrenzfläche (102), und
• zuordnen des jeweils ermittelten Abstands zu den jeweiligen Datenpunkten (104) als Distanzwert.

7. Verfahren nach einem der vorhergehenden Ansprüche, **dadurch gekennzeichnet, dass** es sich bei der Objektdarstellung um eine gerasterte Darstellung des Objekts handelt, wobei die gerasterte Darstellung eine Vielzahl von in einem Raster angeordneten Messpunkten einer Messung des Objekts aufweist, wobei ein Messpunkt wenigstens eine Bildinformation aufweist.

8. Verfahren nach Anspruch 7, **dadurch gekennzeichnet, dass** es sich bei der Messung um eine computertomographische Messung handelt, wobei die Bildinformation eines Bildpunktes die Röntgendichte des Materials des Objekts an der Stelle des Bildpunktes anzeigt.

9. Computerprogrammprodukt mit auf einem Computer ausführbaren Instruktionen, welche auf einem Computer ausgeführt den Computer dazu veranlassen, das Verfahren nach einem der vorhergehenden Ansprüche durchzuführen.

## Claims

1. Computer-implemented method for determining a local deviation of a geometry of an object from a target geometry of the object from a digital representation of the object, wherein the object representation comprises a plurality of items of image information of the object, wherein an item of image information indicates a value of a measured variable for the object at a defined position of the object, wherein the method comprises the following steps:
• ascertaining the object representation,
• ascertaining a distance field from the items of image information of the object representation, wherein the distance field comprises a plurality of distance values, wherein a distance value for a specific point of the distance field specifies the shortest spacing of the point to a closest material boundary surface (102) of the geometry of the object,
• ascertaining the target geometry (108) of the object, wherein
the target geometry (108) of the object is predetermined by a user input and/or the target geometry (108) of the object is ascertained from a CAD file,
• registering the target geometry (108) of the object on the material boundary surfaces of the geometry of the object specified by the distance values, and
• ascertaining the local deviation of the geometry of the object from the target geometry (108) of the object at a test point on a material boundary surface predetermined by the target geometry (108) by reading out the distance value of the distance field at the position of the test point.

2. Method according to Claim 1, **characterized in that**, to register the target geometry (108) of the object to the material boundary surfaces (102) of the geometry of the object specified by the distance values, the target geometry (108) of the object is fitted into the distance field by application of a fit method.

3. Method according to Claim 2, **characterized in that** the target geometry (108) of the object is fitted into the distance field by application of the method of least squares and/or a minimum zone fit and/or by fitting the target geometry (108) as an inscribed and/or circumscribed figure.

4. Method according to any of the preceding claims, **characterized in that** the distance field comprises a plurality of data points (104) arranged in a raster, wherein the distance field assigns each of the data points (104) at least one distance value for the position of the data point (104).

5. Method according to Claim 4, **characterized in that** the raster of the distance field is an orthogonal and/or isotropic grid.

6. Method according to any of the preceding claims, **characterized in that** the ascertainment of the distance field comprises the following steps:
• ascertaining the location of material boundary surfaces (102) from the items of image information of the object representation,
• ascertaining a respective material boundary surface (102) closest to a data point (104) for the data points (104) of the distance field,
• ascertaining the respective distance of the data points (104) from the respective closest material boundary surface (102), and
• assigning the respective ascertained spacing to the respective data points (104) as a distance value.

7. Method according to any of the preceding claims, **characterized in that** the object representation is a rastered representation of the object, wherein the rastered representation comprises a plurality of measurement points of a measurement of the object arranged in a raster, wherein a measurement point comprises at least one item of image information.

8. Method according to Claim 7, **characterized in that** the measurement is a computed tomography measurement, wherein the item of image information of a pixel indicates the X-ray density of the material of the object at the point of the pixel.

9. Computer program product having instructions executable on a computer, which instructions, when executed on a computer, cause the computer to carry out the method according to any of the preceding claims.

## Revendications

1. Procédé mis en œuvre par ordinateur permettant de déterminer un écart local entre une géométrie d'un objet et une géométrie de consigne de l'objet à partir d'une représentation numérique de l'objet, la représentation d'objet présentant une pluralité d'informations d'image de l'objet, dans lequel une information d'image indique une valeur d'une grandeur de mesure pour l'objet dans une position définie de l'objet, le procédé présentant les étapes suivantes consistant à :
• établir la représentation d'objet,
• établir un champ de distance à partir des informations d'image de la représentation d'objet, le champ de distance présentant une pluralité de valeurs de distance, une valeur de distance indiquant pour un point déterminé du champ de distance l'espacement le plus court entre le point et une surface limite de matière la plus proche (102) de la géométrie de l'objet,
• établir la géométrie de consigne (108) de l'objet, dans lequel la géométrie de consigne (108) de l'objet est spécifiée par une entrée utilisateur et/ou la géométrie de consigne (108) de l'objet est établie à partir d'un fichier de CAO,
• cadrer la géométrie de consigne (108) de l'objet sur les surfaces limites de matière, indiquées par les valeurs de distance, de la géométrie de l'objet, et
• établir l'écart local entre la géométrie de l'objet et la géométrie de consigne (108) de l'objet en un point de contrôle sur une surface limite de matière, prédéfinie par la géométrie de consigne (108), par la lecture de la valeur de distance du champ de distance à la position du point de contrôle.

2. Procédé selon la revendication 1, **caractérisé en ce que** pour le cadrage de la géométrie de consigne (108) de l'objet sur les surfaces limites de matière (102), indiquées par les valeurs de distance, de la géométrie de l'objet, la géométrie de consigne (108) de l'objet est ajustée dans le champ de distance par l'application d'un procédé d'ajustement.

3. Procédé selon la revendication 2, **caractérisé en ce que** la géométrie de consigne (108) de l'objet est ajustée par l'application de la méthode des moindres carrés et/ou d'un ajustement de zones minimum et/ou par l'ajustement de la géométrie de consigne (108) comme une figure inscrite et/ou circonscrite dans le champ de distance.

4. Procédé selon l'une quelconque des revendications précédentes, **caractérisé en ce que** le champ de distance présente une pluralité de points de données (104) disposés dans une trame, le champ de distance attribuant aux points de données (104) respectivement au moins une valeur de distance pour la position du point de données (104).

5. Procédé selon la revendication 4, **caractérisé en ce que** la trame du champ de distance est une trame orthogonale et/ou isotrope.

6. Procédé selon l'une quelconque des revendications précédentes, **caractérisé en ce que** l'établissement du champ de distance comprend les étapes suivantes consistant à :
• établir l'emplacement de surfaces limites de matière (102) à partir des informations d'image de la représentation d'objet,
• établir une surface limite de matière (102) respectivement la plus proche d'un point de données (104) pour les points de données (104) du champ de distance,
• établir l'écartement respectif entre les points de données (104) et la surface limite de matière (102) la plus proche respective, et
• attribuer l'écartement respectivement établi par rapport aux points de données (104) respectifs comme une valeur de distance.

7. Procédé selon l'une quelconque des revendications précédentes, **caractérisé en ce que** la représentation d'objet est une représentation tramée de l'objet, la représentation tramée présentant une pluralité de points de mesure, disposés dans une trame, d'une mesure de l'objet, un point de mesure présentant au moins une information d'image.

8. Procédé selon la revendication 7, **caractérisé en ce que** la mesure est une mesure tomodensitométrique, l'information d'image d'un point d'image indiquant la radio-opacité de la matière de l'objet à l'endroit du point d'image.

9. Produit de programme informatique comprenant des instructions exécutables sur ordinateur, qui, lorsqu'elles sont exécutées sur un ordinateur, font que l'ordinateur exécute le procédé selon l'une quelconque des revendications précédentes.
